# EUROPÄISCHE PATENTSCHRIFT

(11) **EP 0 647 084 B1**
(45) Veröffentlichungstag und Bekanntmachung des Hinweises auf die Patenterteilung: **29.04.1998**
(21) Anmeldenummer: 94113514.7
(22) Anmeldetag: 30.08.1994
(51) Int. Cl.: H05B 39/04, H05B 37/03

(54) **Schaltungsanordnung zum Betrieb von Niedervolt-Halogenglühlampen**
Circuit for operating low voltage halogen lamps
Circuit d'alimentation pour une lampe-tungstène halogène à basse tension

(30) Priorität: 01.10.1993 DE 4333610
(43) Veröffentlichungstag der Anmeldung: 05.04.1995
(73) Patentinhaber: Patent-Treuhand-Gesellschaft für elektrische Glühlampen mbH, 81543 München (DE)
(72) Erfinder: Lecheler, Reinhard, D-86633 Neuburg an der Donau (DE); Raiser, Franz, D-81379 München (DE)

(56) Entgegenhaltungen:
- EP-A- 0 466 031
- AT-B- 375 499
- DE-A- 3 735 989
- DE-A- 4 137 207

## Beschreibung

Die Erfindung betrifft eine elektrische Schaltungsanordnung zum Betreiben einer oder mehrerer parallelgeschalteter Niedervolt-Halogenglühlampen gemäß dem Oberbegriff des Anspruchs 1.

Diese Art von Schaltungsanordnung ist beispielsweise von C.H. Sturm und E. Klein in "Betriebsgeräte und Schaltungen für elektrische Lampen", Siemens AG Verlag, 1992, S. 295-304, beschrieben und besteht in der Regel im wesentlichen aus den Funktionsblöcken Gleichrichterschaltung, selbsterregter Halbbrückenwandler und Leistungsübertrager. Die Aufgabe der Gleichrichterschaltung ist es, die Wechselspannung des Netzes - sie hat typisch einen Spannungseffektivwert von 230 V und eine Frequenz von 50 Hz - auf eine pulsierende Gleichspannung mit doppelter Frequenz zu transformieren. Eine anschließende Glättung dieser Spannung ist nicht erforderlich, da die Trägheit einer Glühlampe wesentlich größer ist, als die entsprechende Pulsperiode von 10 ms. Dadurch ergibt sich, trotz des mit der Halbperiode des Netzes modulierten Lampenstromes, ein konstanter, d.h. unmodulierter Lichtstrom. Der selbsterregte Halbbrückenwandler - seine Funktionsweise ist ausführlich im oben zitierten Buch von Sturm und Klein beschrieben-zerhackt die gleichgerichtete Netzspannung zu einer mit der doppelten Netzfrequenz modulierten Hochfrequenz von typisch einigen 10 kHz. Für den Start dieser Schwingung ist der selbsterregte Halbbrükkenwandler u.a. mit einem Triggergenerator versehen. Im Betrieb wird die Schwingung durch eine Stromrückkopplung mittels eines Steuerübertragers aufrechterhalten. Der Leistungsübertrager transformiert die hochfrequente Spannung auf die Nennspannung der mit seiner Sekundärwicklung verbundenen Niedervolt-Halogenglühlampen, typisch 6, 12 oder 24 V. Dabei können auch mehr als eine Lampe elektrisch parallelgeschaltet sein.

Diese Art von Schaltungsanordnungen sind beispielsweise aus der EP-PS 0 264 765 oder der DE-OS 40 11 742 vorbekannt. Nachteilig bei diesen Lösungen ist, daß im Kurzschluß- bzw. Überlastfall, wie er beispielsweise durch Überschreiten der Nominalleistung der Schaltungsanordnung durch Parallelschalten mehrerer Lampen oder durch Kurzschluß der Lampenzuführungen auftreten kann, keine Absicherung vorgesehen ist. Neben die Forderung, daß die Schaltungsanordnung durch einen Kurzschluß nicht zerstört wird, tritt der Sicherheitsaspekt, der insbesondere bei großen Nominalleistungen zunehmend an Bedeutung gewinnt. So dürfen beispielsweise auch bei unzulässigen Lasten weder für Personen Gefahren durch Stromschlag noch für Gegenstände Brandgefahren durch übermäßige Wärmeentwicklung der Schaltungsanordnung bzw. der Lampenzuführungen entstehen. In der Vorschrift IEC 598 (bzw. VDE 0711) sind daher Sicherheitsanforderungen für Leuchten mit frei zugänglichen Lampenzuführungen auch für einen sehr niederohmigen Kurzschlußfall enthalten.

Eine prinzipielle Möglichkeit diesen Forderungen nachzukommen ist, zum einen den Halbbrückenwandler so zu dimensionieren, daß die Schwingung in jedem Nulldurchgang der Netzspannung (bzw. in jedem Spannungsminimum der gleichgerichteten pulsierenden Versorgungsspannung) endet und zum anderen den Triggergenerator bei Auftreten eines Überlast- bzw. Kurzschlußfalls für eine befristete Zeit abzuschalten. Durch diese beiden Maßnahmen wird der elektrische Leistungsfluß vom Netz zum Ausgang der Schaltungsanordnung ab Erreichen des nächstfolgenden Spannungsminimums für eine voreinstellbare Zeitdauer unterbrochen. Typische Werte für diese sogenannte Wiedereinschaltverzögerung sind eine oder mehrere Sekunden.

Eine Realisierung dieses Prinzips verwendet als Sensorsignal eine dem Ausgangsstrom proportionale Spannung, die am Emitterwiderstand eines Halbbrückentransistors entsteht. Überschreitet dieses Sensorsignal einen voreinstellbaren Schwellenwert, wird mittels eines Schaltelements der Triggergenerator abgeschaltet. Diese Variante ist allgemein bekannt und beispielsweise von M. Bairanzade in "Intelligent beschaltete Lampen", Elektronik Journal 14/92, S. 23-26, dokumentiert. Als Schaltelement wird bevorzugt ein Transistor eingesetzt, da hiermit ein selbsttätiges Wiedereinschalten der Schaltungsanordnung realisiert werden kann. Ist nach Ablauf der Wiedereinschaltverzögerung der Ausgang der Schaltungsanordnung noch unzulässig hoch belastet, wird der Triggergenerator abermals abgeschaltet. Dadurch wird die Schaltungsanordnung zyklisch ein- bzw. ausgeschaltet. Andernfalls nimmt die Schaltungsanordnung wieder ihren Normalbetrieb ein. Wird hingegen ein Thyristor als Schaltelement eingesetzt, so muß der Eingang der Schaltungsanordnung von der Netzspannung abgetrennt werden, bevor der Normalbetrieb wieder einsetzt. Ein Nachteil dieser Art von Schaltungsanordnungen resultiert daraus, daß das Sensorsignal näherungsweise proportional zur positiven Halbwelle des Laststroms ist. Die Diskretisierung zwischen Normalbetrieb und Überlastfall erfolgt so im wesentlichen durch die nichtlineare Eingangskennlinie des Abschalttransistors und dessen Beschaltung. Dazu ist ein Transistortyp mit hoher Stromverstärkung erforderlich, wodurch das Abschaltverhalten besonders durch Temperatureinflüsse und Exemplarstreuungen beeinflußt wird. Außerdem fließt auch im Normalbetrieb ein Strom durch den Emitterwiderstand, was den Wirkungsgrad der Schaltungsanordnung verschlechtert.

Aufgabe der Erfindung ist es, diese Nachteile zu vermeiden und eine Schaltungsanordnung anzugeben, die es ermöglicht, einen Überlast- bzw. Kurzschlußfall zuverlässig zu erkennen, dazu möglichst wenige und preiswerte Bauteile benötigt und mit einem kostengünstigen Standardtyp als Abschalttransistor betrieben werden kann.

Diese Aufgabe wird erfindungsgemäß durch die kennzeichnenden Merkmale des Anspruchs 1 gelöst. Weitere vorteilhafte Ausführungen sind in den Unteransprüchen erläutert.

Der Grundgedanke der Erfindung besteht darin, ein Sensorsignal A nur dann zu erzeugen, wenn der Laststrom einen bestimmten Wert überschreitet. Für das Erkennen eines Überlast- bzw. Kurzschlußfalls ist damit nicht mehr der ggf. durch Störungen etc. verfälschte absolute Wert des Sensorsignals wesentlich, sondern der Umstand, daß ein nennenswertes Sensorsignal A an sich vorhanden ist. Dieses Schwellenverhalten des Sensorsignals A beim Überschreiten eines voreinstellbaren Wertes des Laststromes ermöglicht eine wesentlich zuverlässigere Detektion eines Überlast- bzw. Kurzschlußfalls und stellt geringere Anforderungen an den Abschalttransistor, als herkömmliche Sensorschaltungen.

Die erfindungsgemäße Realisierung nutzt die Lastabhängigkeit des Lade- bzw. Entladeverhaltens der zwei Brückenkondensatoren eines selbsterregten Halbbrückenwandlers. Zunächst wird durch eine geeignete Maßnahme verhindert, daß sich die Brükkenkondensatoren negativ aufladen können, z.B. indem ihnen jeweils eine im Normalbetrieb sperrende Diode parallelgeschaltet wird. Überschreitet der Laststrom einen durch die Dimensionierung der beiden Brückenkondensatoren beeinflußbaren Wert, so wird abwechselnd bei jedem Takt des Halbbrückenwandlers einer der beiden Brückenkondensatoren vollständig entladen und der jeweils andere auf die volle momentane Versorgungsspannung aufgeladen.

Ist nun der mit dem negativen Pol der Gleichrichterschaltung verbundene erste Brückenkondensator vollständig entladen und der zweite Brückenkondensator auf die volle momentane Versorgungsspannung aufgeladen, macht sich das induktive Verhalten des Leistungsübertragers derart bemerkbar, daß am Verbindungspunkt der beiden Brückenkondensatoren ein bezüglich des negativen Pols der Gleichrichterschaltung negatives Potential entsteht. Demzufolge wird die dem ersten Brückenkondensator parallelgeschaltete erste Diode, die Sensor-Diode, leitend, und es fließt ein negativer Strom durch diese Diode. Mittels eines Strom-Spannungswandlers - im einfachsten Fall ist dies ein mit der Sensor-Diode in Reihe geschalteter Widerstand - wird das Sensorsignal A erzeugt.

Gegebenenfalls muß dieses negative Spannungssignal invertiert werden, bevor der Abschalttransistor, z.B. ein bipolarer Transistor vom NPN-Typ, angesteuert wird. Dazu wird dem Widerstand beispielsweise die Reihenschaltung eines Kondensators und einer Stützdiode parallelgeschaltet, wobei die Anode dieser Stützdiode mit dem negativen Pol der Gleichrichterschaltung verbunden ist. Wird nun ein (negatives) Sensorsignal A erzeugt, so lädt sich zunächst der Kondensator über die Stützdiode auf. Sobald das Sensorsignal im nächstfolgenden Takt des Halbbrückenwandlers endet, sperrt die Stützdiode. An ihrem Verbindungspunkt mit dem Kondensator kann ein positives Spannungssignal für die Ansteuerung des Abschalttransistors abgegriffen werden. Dabei bildet das Massepotential, d.h. der negative Pol der Versorgungsspannung, das gemeinsame Bezugspotential. Alternativ kann ein positives Spannungssignal auch direkt über dem Kondensator abgegriffen werden, wobei dann der Verbindungspunkt zwischen Sensor-Widerstand und Sensor-Diode das mit dem Abschaltkreis gemeinsame Bezugspotential bildet. Damit steht ein positives Spannungssignal zur Verfügung, daß **nicht** wie im vorherigen Fall jeweils während der Erzeugung eines Sensorsignals, d.h. während die Stützdiode leitend ist, zyklisch unterbrochen ist.

Dem Eingang des Abschalttransistors ist noch ein Verzögerungsglied vorgeschaltet. Diese Notwendigkeit ergibt sich aus der Tatsache, daß beim Kaltstart einer Lampe die Glühwendel im allgemeinen ungefähr Zimmertemperatur, im Normalbetrieb hingegen größenordnungsmäßig eine Temperatur von ca. 2500-3500 K hat. Die Glühwendel einer Halogenglühlampe besteht aus einem Metalldraht, vorzugsweise aus Wolframdraht, dessen elektrischer Widerstand mit steigender Temperatur zunimmt. Die Kaltstartphase entspricht also de facto einem kurzzeitigen Überlastbetrieb. Dabei fließt während typisch einigen 100 ms ein erhöhter Strom, der das mehrfache des Nominalstroms betragen kann. Beispielsweise fließt bei einer 12 V, 100 W-Halogenlampe der zehnfache Nominalstrom, wobei der stationäre Zustand erst nach mehr als 200 ms erreicht wird. Um nun einerseits die Sicherheitsanforderungen zu erfüllen und im Überlast- bzw. Kurzschlußfall abzuschalten, andererseits aber einen Kaltstart der Lampe zu ermöglichen, muß in jedem Fall eine Zeitverzögerung ein vorzeitiges Abschalten des Triggergenerators verhindern. Im einfachsten Fall wird dabei ein Speicherkondensator, evtl. über einen Ladewiderstand, durch das ggf. invertierte Sensorsignal A geladen. Erreicht die Spannung des Speicherkondensators die Schwellenspannung der Basis-Emitter-Strecke des Abschalttransistors, wird dieser durchgesteuert und schaltet den Triggergenerator ab. Ferner entlädt sich der Speicherkondensator, evtl. über einen Entladewiderstand. Unterschreitet die Spannung am Speicherkondensator bzw. Entladewiderstand die Schwellenspannung, so sperrt der Abschalttransistor und der Triggergenerator kann die Schwingung des Halbbrückenwandlers erneut starten. Die Zeitverzögerung zwischen Erzeugung des Sensorsignals A und Durchsteuern des Abschalttransistors wird im wesentlichen durch die Dimensionierung von Ladewiderstand und Speicherkondensator bestimmt. Die Wiedereinschaltverzögerung - das ist die Zeitdauer, während der der Abschalttransistor leitend ist und somit den Triggergenerator abschaltet - wird entsprechend durch die Dimensionierung von Speicherkondensator und Entladewiderstand bestimmt.

Vorteilhaft kann auch ein Doppel-RC-Glied verwendet werden. In diesem Fall wird der Kondensator des ersten RC-Glieds durch das Sensorsignal A auf eine höhere Spannung aufgeladen, als jene des Kondensators des zweiten RC-Glieds, welche den Abschalttransistor ansteuert. Dadurch kann der erste Kondensator den zweiten auch nach Abschalten des Halbbrückenwandlers nachladen, wodurch eine längere Wiedereinschaltverzögerung realisiert werden kann. Dies ist vorteilhaft, um im Überlast- bzw. Kurzschlußfall die Schaltungsanordnung nicht zu stark zu erwärmen. Das Doppel-RC-Glied wird bevorzugt so dimensioniert, daß im Überlastfall an dessen Ausgang einerseits die Schwellenspannung des Abschalttransistors erst erreicht wird, wenn die Kaltstartphase der Lampe beendet ist, typisch nach einigen zehntel Sekunden. Andererseits sollen die zyklischen Wiedereinschaltversuche nicht zu häufig gestartet werden. Typische Wiedereinschaltverzögerungen sind eine oder mehrere Sekunden.

Charakteristisch für diese Abschaltungskonzeption ist die Gleichbehandlung eines Überlastfalls, bzw. des "Quasi"-Überlastfalls der Kaltstartphase, und eines - möglicherweise sehr niederohmigen - Kurzschlußfalls, da nur ein Sensorsignal erzeugt wird und somit eine Unterscheidung beider Fälle nicht möglich ist. Dies bedeutet, daß auch bei Vorliegen eines niederohmigen Kurzschlusses der Halbbrückenwandler noch mindestens für die Dauer weiterschwingt, die für eine Lampenkaltstartphase benötigt wird. Dies ist bei Schaltungsanordnungen, die für kleine bis mittlere Lampenleistungen ausgelegt sind, eine akzeptable und kostengünstige Lösung, da auch preiswerte Brückentransistoren den auftretenden Kurzschlußströmen ausreichend lange widerstehen.

Bei Schaltungsanordnungen für hohe Nominalleistungen können im niederohmigen Kurzschlußfall aber sehr hohe Ströme fließen, so daß durch eine zu lange Zeitverzögerung die Gefahr der Zerstörung der Schaltungsanordnung besteht. Daher müssen die entsprechenden Bauteile der Schaltung, insbesondere die Transistoren des Halbbrückenwandlers, so dimensioniert werden, daß sie den hohen Kurzschlußströmen ausreichend lange widerstehen. Dieser Notbehelf verteuert allerdings die Schaltungsanordnung nicht unerheblich.

Eine vorteilhafte Erweiterung der Erfindung besteht nun darin, bei Schaltungsanordnungen für hohe nominelle Lampengesamtleistungen, den Kurzschlußfall und den Überlastfall getrennt zu detektieren und mit unterschiedlichen Zeitkonstanten das Abschalten der Schaltungsanordnung auszulösen. Auf diese Weise können die erforderlichen Bauteile und ihre Verschaltung für den jeweiligen Fall optimiert werden.

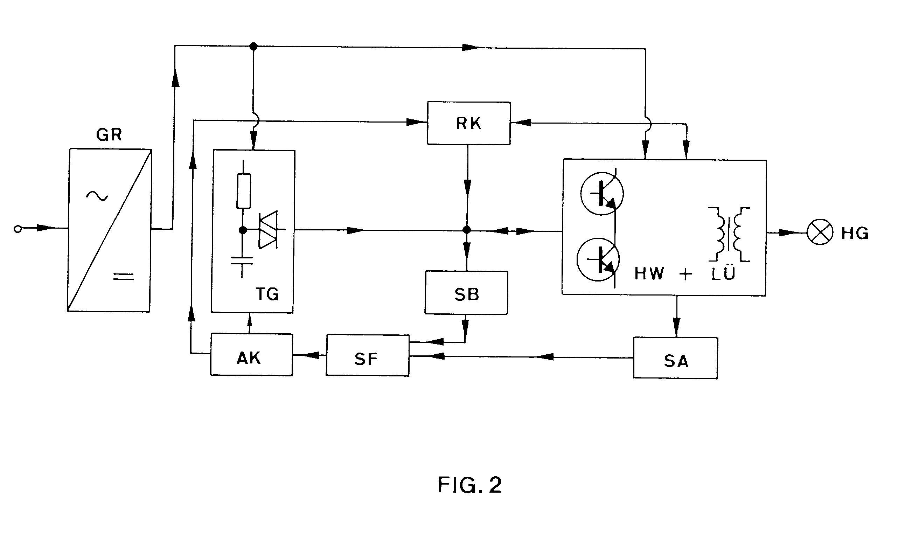

Wird ein niederohmiger Kurzschluß mit entsprechend hohem Ausgangsstrom erkannt, so ermöglicht die Schaltungsanordnung ein Abschalten mit kurzer Zeitkonstante. Der Überlastfall wird hingegen mit langer Zeitkonstante behandelt, um gegebenenfalls den Kaltstart der Lampe zu ermöglichen. Der entscheidende Vorteil dieser Lösung besteht also darin, daß durch die getrennte Behandlung von Überlast- und Kurzschlußfall die Brückentransistoren vor länger andauernden hohen Kurzschlußströmen wirkungsvoll geschützt werden. Dadurch können relativ kostengünstige Typen verwendet werden. Das Prinzip der erweiterten Schaltungsanordnung zeigt das Blockschaltbild in Figur 2. Es besteht zunächst aus den gleichen Funktionsblöcken wie die einfache Schaltungsanordnung: Einer Gleichrichterschaltung GR, einem Triggergenerator TG, beispielsweise einem Diac-Triggergenerator, einem selbsterregten Halbbrückenwandler HW mit Rückkopplung RK und Leistungsübertrager LÜ, der mit einer oder mehreren parallelgeschalteten Halogenglühlampen HG und einer Sensorschaltung A (SA) verbunden ist, die ein Sensorsignal A erzeugen kann, und welches über die Signalformungsschaltung SF dem Abschaltkreis AK zugeführt wird, der den Triggergenerator TG ansteuert. Die Erweiterung besteht nun in der zusätzlichen Sensorschaltung B (SB), die ein Sensorsignal B erzeugen kann, und mit dem Triggergenerator TG, dem Halbbrückenwandler HW und der Signalformungsschaltung SF verbunden ist. Außerdem kann der Abschaltkreis zusätzlich die Rückkopplung RK beeinflussen.

Die Sensorschaltung B erzeugt ein Sensorsignal B beispielsweise dadurch, daß ein Spannungssignal an derjenigen Sekundärwicklung des Steuertransformators abgegriffen wird, die mit demjenigen Brückentransistor verbunden ist, dessen Emitter mit dem Minuspol der Gleichrichterschaltung kontaktiert ist. Vorteilhaft wird dieses Signal mittels einer Zusatzwicklung des Steuertransformators auf einen ausreichend hohen Pegel transformiert.

Außerdem enthält der Abschaltkreis eine Entkoppelschaltung, die zwischen Triggergenerator und Zusatz- bzw. Sekundärwicklung des Steuertransformators geschaltet ist. Sie verhindert eine unerwünschte gegenseitige Beeinflussung von Triggergenerator und Halbbrückentransistor und besteht beispielsweise aus zwei seriellen Dioden, die mit ihren Kathoden verbunden sind. Bevorzugt wird der Verbindungspunkt beider Kathoden mit dem Abschaltelement, beispielsweise dem Kollektor eines Abschalttransistors verbunden. Durch diese Maßnahme kann sich bei leitendem Abschalttransistor der Kondensator des Triggergenerators nicht aufladen, da der Ladestrom über die mit diesem Kondensator verbundene leitende erste Diode und den Abschalttransistor abfließt, wodurch ein Triggerimpuls verhindert wird. Ferner fließt durch die zweite mit dem Steuertransformator verbundene Diode der Rückkoppelstrom, d.h. der Steuerstrom des entsprechenden Halbbrückentransistors ab, wodurch die Schwingung des Halbbrückenwandlers beendet wird, noch bevor die Versorgungsspannung ihr Minimum erreicht. Auf diese Weise wird die Zeitdauer, in der erhöhte Ströme durch die Brückentransistoren fließen, im Kurzschlußfall, ggf. auch im Überlastfall, minimiert. In jedem Fall wird verhindert, daß der Halbbrückenwandler im Überlast- bzw. Kurzschlußfall auch noch während des Nulldurchgangs der Netzspannung ungedämpft weiterschwingt.

Um auch schon bei moderaten Steuerströmen, sowohl den Strom von Triggergenerator als auch den Strom von der Rückkopplung durch den Abschalttransistor abfließen lassen zu können, wird dafür ein hochverstärkender Typ oder mehrere Transistoren, beispielsweise in Darlington-Schaltung verwendet.

Als gemeinsames Bezugspotential für die Signalformungsschaltung SF und den Abschaltkreis AK wird bevorzugt der Verbindungspunkt zwischen Sensor-Diode und Sensor-Widerstand gewählt. Alternativ kann dafür auch das Massepotential verwendet werden, wodurch das Abschaltelement jeweils während der Erzeugung des negativen Sensorsignals A kurzzeitig sperrt. Dabei werden durch die Induktivitäten der Sensorschaltung B unerwünscht hohe Spannungen induziert. Dies erfordert besonders spannungsfeste und damit teure Transistoren im Abschaltkreis.

Die getrennte Behandlung von Überlast- und Kurzschlußfall wird folgendermaßen ermöglicht. Die Sensorschaltung A ist so dimensioniert, daß der Schwellenlaststrom zur Erzeugung eines Sensorsignals A nur im Kurzschlußfall erreicht wird, das Sensorsignal B hingegen bereits im Überlastfall zur Verfügung steht. Sensorsignal A bzw. B werden dann innerhalb der Signalformungsschaltung SF unterschiedlichen Verzögerungsgliedern zugeführt. Die Verzögerungsglieder können beispielsweise durch RC- oder auch Doppel-RC-Glieder realisiert sein. Die Zeitverzögerung für das Sensorsignal B wird vorteilhaft so lang gewählt, daß die Schaltungsanordnung während der Kaltstartphasen nicht abschaltet. Dauert das Sensorsignal B hingegen länger als die Kaltstartphase an, liegt ein Überlastfall vor und der Abschaltkreis wird aktiv.

Im Kurzschlußfall - und nur dann - erzeugt die Sensorschaltung A ein Sensorsignal A, welches den Abschaltkreis ansteuert, und zwar mit wesentlich kleinerer Zeitverzögerung als das Sensorsignal B im Überlastfall.

Auf diese Weise ist gewährleistet, daß die Schaltungsanordnung einerseits im Kurzschlußfall schnell abgeschaltet wird, andererseits aber im "Quasi-Überlastfall" der Kaltstartphase in Betrieb bleibt.

In einer vorteilhaften Ausgestaltung der erfindungsgemäßen erweiterten Schaltungsanordnung wird das Abschaltelement durch einen Kondensator und über einen Entladewiderstand angesteuert, wobei der Kondensator von beiden Sensorsignalen A bzw. B aufgeladen, d.h. als Speicher benutzt wird. Dadurch wird die Anzahl der benötigten Bauteile auf ein Minimum beschränkt. der Entladewiderstand ist dabei so dimensioniert, daß sich der Kondensator nicht zu schnell entlädt, d.h. die gewünschte Wiedereinschaltverzögerung gewährleistet ist. Um nun aber im niederohmigen Kurzschlußfall sowohl den Speicherkondensator des Triggergenerators schnell entladen als auch den Rückkoppelstrom rasch abschwächen zu können, müssen hohe Ströme durch das Abschaltelement abfließen, d.h. es ist ein entsprechend hoher Steuerstrom erforderlich. Ein dem Entladewiderstand parallelgeschaltetes spannungsgesteuertes Schaltelement, beispielsweise eine Zenerdiode, verbindet im Kurzschlußfall den Kondensator und das Abschaltelement niederohmig, solange die Kondensatorspannung größer ist, als die Zündspannung der Zenerdiode.

Die Erfindung wird anhand der nachfolgenden Ausführungsbeispiele näher erläutert. Es zeigen
- Fig. 1: ein Ausführungsbeispiel einer erfindungsgemäßen Schaltungsanordnung, die eine Sensorschaltung A aufweist und für eine nominelle Leistung von 60 W ausgelegt ist
- Fig. 2: ein Blockschaltbild, welches schematisch eine erfindungsgemäße Schaltungsanordnung darstellt, die eine erste Sensorschaltung SA und eine zweite Sensorschaltung SB aufweist
- Fig. 3: ein Ausführungsbeispiel einer erfindungsgemäßen Schaltungsanordnung, die eine erste Sensorschaltung A und eine zweite Sensorschaltung B aufweist und für eine nominelle Leistung von 150 W ausgelegt ist.

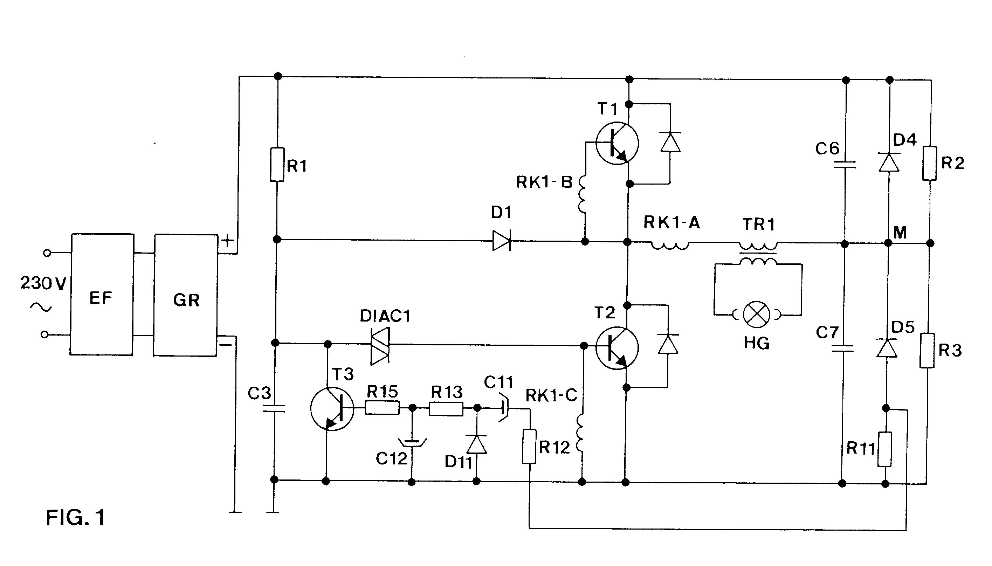

Fig. 1 zeigt eine erfindungsgemäße Schaltungsanordnung, die für eine maximale Leistung von 60 W ausgelegt ist. Sie weist folgende Merkmale auf: Ein Eingangsfilter EF, eine Gleichrichterschaltung GR, ein Diac-Triggergenerator, bestehend aus dem Widerstand R1, dem Kondensator C3 und dem Diac DIAC1, ein selbsterregter stromrückgekoppelter Halbbrükkenwandler, bestehend aus den beiden Halbbrückentransistoren T1 und T2 mit integrierten Rückflußdioden, den beiden Brückenkondensatoren C6 und C7 sowie den beiden Widerständen R2 und R3 zur Symmetrierung der Versorgungsspannung, den beiden Dioden D4 und D5, die verhindern, daß sich die beiden Brückenkondensatoren C6 und C7 negativ aufladen, ein Steuertransformator für die Stromrückkopplung, der aus der Primärwicklung RK1-A und den beiden Sekundärwicklungen RK1-B und RK1-C besteht, ein Leistungsübertrager TR1, der mit einer oder mehreren parallelgeschalteten 12V Halogenglühlampe(n) HG und einer maximalen gesamten Leistungsaufnahme von 60 W verbunden ist, eine Sensorschaltung A, bestehend aus einer Reihenschaltung der Diode D5 und dem Widerstand R11, die parallel zu dem mit dem Bezugspotential verbundenen Kondensator C7 geschaltet ist, eine Signalformungsschaltung, bestehend aus einer Inverterschaltung, die den Widerstand R12, den Kondensator C11 und die Diode D11 enthält, sowie ein Verzögerungs- und Halteglied, bestehend aus den Kondensatoren C11, C12 und den beiden Widerständen R13 und R15, ein Abschaltkreis, bestehend aus dem Transistor T3.

Das Eingangsfilter schützt das Netz vor dem hochfrequenten Signal des Halbbrückenwandlers, indem es dieses Signal sperrt, den niederfrequenten Netzstrom hingegen passieren läßt. Dies wird üblicherweise durch einen linearen passiven Vierpol realisiert, der ausschließlich Reaktanzen enthält und somit entsprechend geringe Verluste aufweist. In Frage kommen daher Kombinationen aus Kondensatoren und Spulen, die beispielsweise in Pi-Form oder T-Form geschaltet sind. Die Gleichrichterschaltung besteht aus einer Dioden-Vollbrücke. Ihr negativer Pol ist im folgenden das Bezugspotential. Der Kondensator C3 des Diac-Triggergenerators wird einerseits über den Widerstand R₁ aufgeladen. Andererseits entlädt sich C3, während der Halbbrükkenwandler schwingt, im wesentlichen über die Diode D1 und den Transistor T2. Während des Nulldurchgangs der Netzspannung endet die Schwingung des Halbbrückenwandlers, da die Spannungspegel an den Basisanschlüssen der beiden Halbbrückentransistoren T1 und T2 die jeweiligen Schwellenwerte zur Ansteuerung unterschreiten. Dies wird durch eine geeignete Dimensionierung der beiden Sekundärwicklungen RK1-B und RK1-C des Steuertransformators erreicht.

Überschreitet die an der Sekundärwicklung des Leistungstransformators TR1 wirksame Last einen durch die Dimensionierung der beiden Brückenkondensatoren C6 und C7 beeinflußbaren Schwellenwert, so wird bei jedem Takt des Halbbrückenwandlers abwechselnd jeweils der eine Brückenkondensator vollständig entladen und der andere vollständig geladen. In dem Moment, in dem der Brückenkondensator C6 auf die gesamte momentane Versorgungsspannung aufgeladen und der Kondensator C7 vollständig entladen ist, wird aufgrund des induktiven Verhaltens des Leistungsübertragers TR1 das Potential am Mittenpunkt M der beiden Brückenkondensatoren C6 und C7 negativ. Dadurch wird die Sensor-Diode D5 leitend. Am Sensor-Widerstand R11 entsteht daraufhin ein negatives Spannungssignal - das Sensorsignal. Da der Abschalttransistor T3 eine positive Steuerspannung erfordert (NPN-Typ), wird das Sensorsignal zunächst invertiert. Dazu wird der Kondensator C11 über den Widerstand R12 und die momentan leitende Diode D11 aufgeladen. Mit Beginn des nächstfolgenden Taktes des Halbbrückenwandlers ist das Potential am Mittenpunkt M positiv und sowohl die Sensor-Diode D5 als auch die Diode D11 sperren. Nun kann der Kondensator C11, der zusammen mit den Widerständen R13 und R15 sowie dem Kondensator C12 ein Doppel-RC-Glied bildet, die Basis des Abschalttransistors T3 ansteuern. Durch die Dimensionierung dieses Doppel-RC-Gliedes werden die Dauern der Zeitverzögerung und der Wiedereinschaltverzögerung beeinflußt. Hat die Basisspannung des Abschalttransistors T3 die Schwellenspannung erreicht, so kann sich der Kondensator C3 über den nun leitenden Abschalttransistor T3 entladen. Dadurch kann der Diac DIAC1 nicht durchschalten und ein Triggern des Halbbrückenwandlers wird solange verhindert, bis die Basisspannung des Abschalttransistors T3 die Schwellenspannung unterschreitet.

Dies ist dann der Fall, wenn die Last den vorgegebenen Schwellenwert unterschreitet. Dann werden die beiden Brückenkondensatoren C6 und C7 nicht mehr wechselseitig vollständig geladen bzw. entladen und es wird kein Sensorsignal mehr erzeugt. Dadurch werden die Kondensatoren C11 bzw. C12 nicht mehr gespeist und der Abschalttransistor T3 sperrt nach Ablaufen der Wiedereinschaltverzögerung. Nachdem sich nun der Kondensator C3 auf die Zündspannung des Diac DIAC1 aufgeladen hat, wird ein Triggersignal erzeugt, welches die Schwingung des Halbbrükkenwandlers erneut startet.

Fig. 2 zeigt ein Blockschaltbild der erweiterten Schaltungsanordnung. Außer den in Fig. 1 beschriebenen Funktionsblöcken Gleichrichterschaltung GR, Halbbrückenwandler HW mit Rückkopplung RK und Triggergenerator TG, Leistungsübertrager LÜ mit Halogenglühlampe HG, Sensorschaltung SA und Signalformung SF mit Abschaltkreis AK, enthält es zusätzlich die Sensorschaltung SB.

Der entscheidende Vorteil ist, daß es dadurch möglich ist, den Überlast- bzw. Kurzschlußfall getrennt und optimiert zu behandeln. Dazu ist die Sensorschaltung SA so dimensioniert, daß sie nur im Kurzschlußfall ein Sensorsignal A erzeugt. Dieses steuert über eine sehr kurze Zeitverzögerung durch die Signalformung SF den Abschaltkreis AK an. Das Sensorsignal B wird hingegen aus der Rückkopplung RK gewonnen und ist deshalb bereits im Überlastfall verfügbar. Es steuert mit einer langen Zeitverzögerung durch die Signalformung SF den Abschaltkreis AK an, sofern der Pegel des Sensorsignals B einen voreinstellbaren Schwellenwert übersteigt. Die Dauer dieser Zeitverzögerung für das Sensorsignal B ist so gewählt, daß der Abschaltkreis AK frühestens nach Ablauf der Kaltstartphase der Halogenglühlampe HG den Triggergenerator TG abschaltet.

Außerdem ist der Abschaltkreis AK so aufgebaut, daß er nicht nur den Triggergenerator TG abschaltet, sondern zusätzlich die Rückkopplung RK so weit abschwächt, daß der Halbbrückenwandler HW unmittelbar, d.h. schon vor dem nächsten Nulldurchgang der Netzspannung abgeschaltet wird, oder aber spätestens während des Nulldurchgangs der Netzspannung. Auf diese Weise wird die Zeitdauer, in der erhöhte Ströme insbesondere durch die Transistoren des Halbbrückenwandlers HW fließen, minimiert, so daß kostengünstige Standardtypen verwendet werden können.

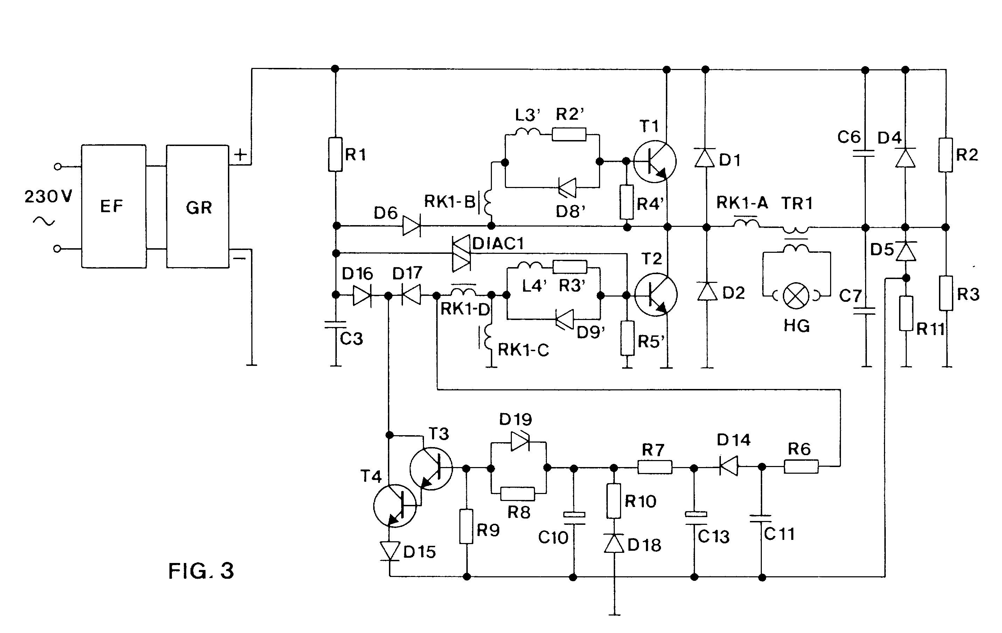

Fig. 3 zeigt eine erfindungsgemäße Schaltungsanordnung, die für eine maximale Leistung von 150 W ausgelegt und nach dem Funktionsprinzip von Fig. 2 konzipiert ist. Eingangsfilter EF, Gleichrichterschaltung GR sowie der Triggergenerator, bestehend aus einem Kondensator C3, dem Widerstand R1 und dem Diac DIAC1, und der Halbbrückenwandler mit den beiden Transistoren T1 und T2 entsprechen in ihrem Aufbau im wesentlichen jenem aus Fig. 1. Die Spulen L3', L4', Widerstände R2', R3', R4', R5' und Zenerdioden D8', D9' dienen der Formung der Ansteuersignale der beiden Halbbrückentransistoren T1 und T2.

Die Sensorschaltung SA und die nachfolgende Schaltung zur Invertierung des Sensorsignals A sind ähnlich zu jenen in Fig. 1 aufgebaut. Das Sensorsignal A wird im Kurzschlußfall wie in Fig. 1 am Verbindungspunkt der Sensor-Diode D5 und des Sensor-Widerstands R11 abgegriffen. Dieser Verbindungspunkt ist auch das Bezugspotential des nachfolgenden Abschaltkreises. Das Sensorsignal A lädt den Kondensator C10 über den Widerstand R10 und die Diode D18. Ein Abschaltelement - es besteht aus den beiden Transistoren T3 und T4 in Darlington-Schaltung - wird vom Kondensator C10 über den Widerstand R8 und die Zenerdiode D19 angesteuert. Durch die Diode D15 werden die Transistoren T3 und T4 nichtlinear gegengekoppelt, und es wird zusammen mit den Widerständen R8 und R9 die Schwellenspannung des Abschaltelements eingestellt.

Die Sensorschaltung SB besteht aus der Reihenschaltung der Wicklungen RK1-D und RK1-C des Steuertransformators. Der Abschaltkreis beinhaltet die beiden gegensinnig geschalteten Dioden D16 und D17. Letztere entkoppeln den Triggergenerator von der Basisbeschaltung des Brückentransistors T2. Dazu ist erstens die-Anode der Diode D16 mit dem Kondensator C3 des Triggergenerators verbunden. Zweitens ist die Zusatzwicklung RK1-D mit der Anode der Diode D17 einerseits und mit der Sekundärwicklung RK1-C des Steuertransformators zur Stromrückkopplung für den Brückentransistor T2 andererseits verbunden. Dadurch wird erreicht, daß im Überlast- bzw. Kurzschlußfall erstens der Kondensator C3 des Triggergenerators über die Diode D16 und das Abschaltelement T3, T4 entladen und damit die Erzeugung eines Triggersignals für den Halbbrückenwandler verhindert wird. Zweitens fließt ein Teil des Rückkoppelstroms der Sekundärwicklung RK1-C über die Zusatzwicklung RK1-D, die Diode D17 und das Abschaltelement T3, T4 ab. Die Schwingung des Halbbrückenwandlers wird so unmittelbar oder spätestens bei Erreichen des nächsten Nulldurchgangs der Netzspannung beendet.

Das Sensorsignal B wird vom Verbindungspunkt zwischen der Zusatzwicklung RK1-D und der Diode D17 abgegriffen und dem RC-Glied R6, C11 zugeführt. Dessen Bezugspotential bildet der Abgriff am Sensorwiderstand R11. Solange kein niederohmiger Kurzschluß vorliegt, fließt durch R11 kein Strom und das Bezugspotential des RC-Gliedes R6, C11 befindet sich auf Massepotential. Im Kurzschlußfall wird das Bezugspotential negativ im Vergleich zum Massepotential der Schaltungsanordnung und es entsteht das Sensorsignal A, welches das Abschaltelement ansteuert. Nach dem Tiefpaß R6, C11 ist der Spitzenwert des Sensorsignals B unabhängig von der Leitungsinduktivität der Lampenzuführungen. Dies ist von großer Wichtigkeit, um auch bei längeren Lampenzuführungen ein zuverlässiges Abschalten im Überlastfall zu gewährleisten. Die nachfolgende Diode D14 dient zur Spitzenwertgleichrichtung. Der parallel zum Ausgang des Tiefpasses R6, C11 geschaltete Kondensator C13 bildet mit dem Widerstand R6 ein RC-Glied. Gemeinsam mit dem nachfolgenden RC-Glied R7, C10, bestehend aus dem Widerstand R7 und dem Kondensator C10, wird ein Doppel-RC-Glied R6, C13, R7, C10 realisiert. Der Kondensator C13 dient dem Kondensator C10 als Nachladereservoir. Dadurch kann einerseits die Schwellenspannung für das Abschaltelement so gewählt werden, daß bereits bei geringer Überlast eine Abschaltung erfolgt. Andererseits können sowohl die Zeitverzögerung, als auch die Wiedereinschaltverzögerung so eingestellt werden, daß ein Kaltstart bei maximaler Leistung möglich ist bzw. im Überlastfall die Rate der zyklischen Wiedereinschaltversuche nicht so hoch ist, daß eine unzulässige Erwärmung der Schaltungsanordnung auftreten könnte.

Der Kondensator C10 und die nachfolgenden Bauelemente für die Ansteuerung des Abschaltelements T3, T4 sind mit denen identisch, die bereits bei der Ansteuerung durch das Sensorsignal A erläutert wurden.

Nachfolgend sind die Bestückungslisten für die in Fig. 1 bzw. 3 gezeigten Schaltungsanordnungen aufgeführt.

Bestückungsliste für die Schaltungsanordnung gemäß Figur 1:

| | |
|---|---|
| R1 | 270 kΩ |
| R2, R3 | 390 kΩ |
| R11 | 1,5 Ω |
| R12 | 1,8 kΩ |
| R13 | 22 kΩ |
| R15 | 270 kΩ |
| C3 | 8,2 nF |
| C6, C7 | 15 nF |
| C11, C12 | 4,7 µF |
| Rk1-A-C | R10×6×4;1/5/5 Wdgen. |
| TR1 | EF25; 63/7 Wdgen. |
| T1, T2 | B 108/B |
| T3 | BC 850C |
| D1 | BA 157 |
| D4, D5 | 1N4937 |
| D11 | LL 4148 |
| DIAC1 | 33 V |
| HG | 12 V Halogenglühlampe(n), max. 60 W |

Bestückungsliste für die Schaltungsanordnung gemäß Figur 3:

| | |
|---|---|
| R1 | 200 kΩ |
| R2, R3 | 330 kΩ |
| R6 | 12 kΩ |
| R7 | 150 kΩ |
| R8 | 100 kΩ |
| R9 | 470 kΩ |
| R2', R3' | 3,3 Ω |
| C3 | 10 nF |
| C6, C7 | 220 nF |
| C10 | 10 µF |
| C11 | 1,5 nF |
| C13 | 10 µF |
| L3', L4' | 2,2 µH |
| Rk1-A-D | EF 16; 4/10/10/35 Wdgen. |
| TR1 | R31,5×19,5×22; 62/7 Wdgen. |
| T1, T2 | SGS F443 |
| T3 | BC 546B |
| T4 | BD 129/16 |
| D1-D6 | 1N4937 |
| D14 | LL 4148 |
| D15 | 1N4937 |
| D16 | LL 4148 |
| D17,D18 | 1N4937 |
| D8', D9' | 1N4937 |
| D19' | 3,3 V, BZX 793V3 |
| DIAC1 | 33 V |
| HG | 12 V Halogenglühlampe(n), max. 150 W |

## Patentansprüche

1. Schaltungsanordnung zum Betreiben einer oder mehrerer parallelgeschalteter Niedervolt-Halogenglühlampen (HG), bestehend aus
- einer Gleichrichterschaltung (GR)
- einem zwei Brückentransistoren (T1, T2) aufweisenden und über einen Steuertransformator (RK1-A-C) stromrückgekoppelten selbstschwingenden Halbbrückenwandler (HW), wobei der Steuertransformator (RK1-A-C) aus einer Primär-(RK1-A) und zwei Sekundärwicklungen (RK1-B, C) besteht
- parallel zu den Brückentransistoren (T1, T2) angeordneten Brückenkondensatoren (C6, C7)
- einem Triggergenerator (TG), der den Halbbrückenwandler (HW) nach jedem Minimum der gleichgerichteten Netzspannung triggert
- einem Leistungsübertrager (TR1), dessen Primärwicklung über die Primärwicklung (RK1-A) des Steuertransformators (RK1-A-C) mit dem Verbindungspunkt der zwei Brückentransistoren (T1, T2) einerseits und dem Verbindungspunkt der zwei Brückenkondensatoren (C6, C7) andererseits verbunden ist, und dessen Sekundärwicklung mit der bzw. den Halogenglühlampen (HG) verbunden ist
- einem Abschaltkreis (AK), der den Triggergenerator (TG) im Überlast- bzw. Kurzschlußfall abschaltet
- einer Sensorschaltung (SA), die im Überlast- bzw. Kurzschlußfall ein Sensorsignal erzeugt, welches den Abschaltkreis (AK) ansteuert und einer Signalformungsschaltung (SF), die das Sensorsignal für die Ansteuerung des Abschaltkreises (AK) aufbereitet,
dadurch gekennzeichnet, daß
- der Abschaltkreis (AK) als Schaltelement einen Transistor (T3) enthält und
- die Sensorschaltung (SA) aus einer Reihenschaltung eines Sensor-Widerstands (R11) und einer Sensor-Diode (D5) besteht, die parallel zu dem mit dem negativen Pol der Gleichrichterschaltung (GR) verbundenen Brückenkondensator (C7) so geschaltet ist, daß der Sensor-Widerstand (R11) einerseits mit der Anode der Sensor-Diode (D5) und andererseits mit dem negativen Pol der Gleichrichterschaltung (GR) verbunden ist und ein erstes Sensorsignal (A) erzeugt, sobald der Laststrom im Sekundärkreis des Leistungsübertragers (TR1) einen bestimmten Wert überschreitet.

2. Schaltungsanordnung nach Anspruch 1, dadurch gekennzeichnet, daß die Schaltungsanordnung zusätzlich eine zweite Sensorschaltung (SB) aufweist, die ein im wesentlichen mit dem Laststrom zunehmendes zweites Sensorsignal (B) erzeugt.

3. Schaltungsanordnung nach Anspruch 2, dadurch gekennzeichnet, daß die zweite Sensorschaltung (SB) aus jener Sekundärwicklung (RK1-C) des Steuertransformators (RK1-A-C) besteht, die mit demjenigen Brückentransistor (T2) verschaltet ist, dessen Emitter an den negativen Pol der Gleichrichterschaltung (GR) angeschlossen ist.

4. Schaltungsanordnung nach Anspruch 3, dadurch gekennzeichnet, daß der Abschaltkreis (AK) zwei gegensinnig seriell geschaltete Dioden (D16, D17) enthält, wobei die beiden Kathoden der Dioden (D16, D17) miteinander und mit dem Abschaltkreis verbunden sind, die Anode der ersten Diode (D16) mit dem Triggergenerator (TG) und die Anode der zweiten Diode (D17) mit jener Sekundärwicklung (RK1-C) des Steuertransformators (RK1-A-C) verbunden ist, die mit demjenigen Brückentransistor (T2) verschaltet ist, dessen Emitter an den negativen Pol der Gleichrichterschaltung (GR) angeschlossen ist.

5. Schaltungsanordnung nach Anspruch 4, dadurch gekennzeichnet, daß die zweite Sensorschaltung (SB) eine Zusatzwicklung (RK1-D) auf dem Steuertransformator (RK1-A-C) beinhaltet, die zwischen der Sekundärwicklung (RK1-C) des Steuertransformators und der zweiten Diode (D17) geschaltet ist.

6. Schaltungsanordnung nach einem der vorstehenden Ansprüche, dadurch gekennzeichnet, daß die Signalformungsschaltung (SF) verbunden ist mit der Sensorschaltung (SA) im Verbindungspunkt zwischen der Sensor-Diode (D5) und dem Sensor-Widerstand (R11) einerseits und mit dem Abschaltkreis (AK) an der Basis des Transistors (T3) andererseits und ggf. mit der zweiten Sensorschaltung (SB) am Verbindungspunkt zwischen zweiter Diode (D17) und Sekundärwicklung (RK1-C) oder ggf. Zusatzwicklung (RK1-D) des Steuertransformators (RK1-A-C).

7. Schaltungsanordnung nach Anspruch 6, dadurch gekennzeichnet, daß das gemeinsame Bezugspotential von Signalformungsschaltung (SF) und Abschaltkreis (AK) mit dem Verbindungspunkt zwischen der Sensor-Diode (D5) und dem Sensor-Widerstand (R11) verbunden ist.

8. Schaltungsanordnung nach Anspruch 1, dadurch gekennzeichnet, daß die Signalformungsschaltung (SF) ein Doppel-RC-Glied (R6, C13, R7, C10) enthält.

9. Schaltungsanordnung nach Anspruch 8, dadurch gekennzeichnet, daß dem Doppel-RC-Glied (R6, C13, R7, C10) ein RC-Tiefpaß (R6, C11) mit nachfolgender Spitzenwertgleichrichterdiode (D14) vorgeschaltet ist.

10. Schaltungsanordnung nach Anspruch 1, dadurch gekennzeichnet, daß der Triggergenerator (TG) einen Widerstand (R1), einen Kondensator (C3) und einen Diac (DIAC1) enthält, wobei der Widerstand (R1) und der Kondensator (C3) in Reihe geschaltet sind, und der Diac (DIAC1) mit dem Verbindungspunkt zwischen Kondensator (C3) und Widerstand (R1) kontaktiert ist.

11. Schaltungsanordnung nach Anspruch 1, dadurch gekennzeichnet, daß der Transistor (T3) des Abschaltkreises (AK) durch eine Darlington-Schaltung (T3, T4) ersetzt ist.

12. Schaltungsanordnung nach Anspruch 11, dadurch gekennzeichnet, daß der Basisanschluß der Darlington-Schaltung (T3, T4) über die Parallelschaltung einer Zenerdiode (D19) und eines Widerstands (R8) mit der Signalformungsschaltung verbunden ist.

13. Schaltungsanordnung nach Anspruch 1, dadurch gekennzeichnet, daß der Abschaltkreis (AK) im Emitterzweig des Transistors ein weiteres Bauelement aufweist, wodurch die Schwellenspannung für das Durchsteuern des Transistors (T3, T4) beeinflußbar ist.

14. Schaltungsanordnung nach Anspruch 13, dadurch gekennzeichnet, daß das Bauelement ein Ohmscher Widerstand ist.

15. Schaltungsanordnung nach Anspruch 13, dadurch gekennzeichnet, daß das Bauelement ein zweipoliges Halbleiterelement (D15) ist.

## Claims

1. Circuit arrangement for operating one or more parallel-connected low-voltage halogen lamps (HG), comprising
- a rectifier circuit (GR),
- a free-running half-bridge converter (HW) which has two bridge transistors (T1, T2) and is fed back in terms of current via a control transformer (RK1-A-C), the control transformer (RK1-A-C) comprising a primary (RK1-A) and two secondary windings (RK1-B, C),
- bridge capacitors (C6, C7) arranged in parallel with the bridge transistors (T1, T2),
- a trigger generator (TG), which triggers the half-bridge converter (HW) after each minimum of the rectified system voltage,
- a power transformer (TR1), whose primary winding is connected, on the one hand, to the junction point of the two bridge transistors (T1, T2) via the primary winding (RK1-A) of the control transformer (RK1-A-C) and, on the other hand, to the junction point of the two bridge capacitors (C6, C7), and whose secondary winding is connected to the halogen lamp or lamps (HG),
- a turn-off circuit (AK), which turns off the trigger generator (TG) in the case of overloading or short-circuiting, and
- a sensor circuit (SA), which in the case of overloading or short-circuiting generates a sensor signal which drives the turn-off circuit (AK), and a signal-shaping circuit (SF), which conditions the sensor signal for driving the turn-off circuit (AK),
characterized in that
- the turn-off circuit (AK) contains a transistor (T3) as switching element, and
- the sensor circuit (SA) comprises a series circuit of a sensor resistor (R11) and a sensor diode (D5), which is connected in parallel with the bridge capacitor (C7) connected to the negative pole of the rectifier circuit (GR) in such a way that the sensor resistor (R11) is connected, on the one hand, to the anode of the sensor diode (D5) and, on the other hand, to the negative pole of the rectifier circuit (GR), and generates a first sensor signal (A) as soon as the load current in the secondary circuit of the power transformer (TR1) exceeds a specific value.

2. Circuit arrangement according to Claim 1, characterized in that the circuit arrangement additionally has a second sensor circuit (SB), which generates a second sensor signal (B) which essentially increases with the load current.

3. Circuit arrangement according to Claim 2, characterized in that the second sensor circuit (SB) comprises that secondary winding (RK1-C) of the control transformer (RK1-A-C) which is connected to that bridge transistor (T2) whose emitter is connected to the negative pole of the rectifier circuit (GR).

4. Circuit arrangement according to Claim 3, characterized in that the turn-off circuit (AK) contains two diodes (D16, D17) reverse-connected in series, the two cathodes of the diodes (D16, 17) being connected to one another and to the turn-off circuit, the anode of the first diode (D16) being connected to the trigger generator (TG), and the anode of the second diode (D17) being connected to that secondary winding (RK1-C) of the control transformer (RK1-A-C) which is connected to that bridge transistor (T2) whose emitter is connected to the negative pole of the reactifier circuit (GR).

5. Circuit arrangement according to Claim 4, characterized in that the second sensor circuit (SB) contains a booster winding (RK1-D) on the control transformer (RK1-A-C), which is connected between the secondary winding (RK1-C) of the control transformer and the second diode (D17).

6. Circuit arrangement according to one of the preceding claims, characterized in that the signal-shaping circuit (SF) is connected to t.he sensor circuit (SA) at the junction point between the sensor diode (D5) and the sensor resistor (R11), on the one hand, and to the turn-off circuit (AK) at the base of the transistor (T3), on the other hand, and, if appropriate, to the second sensor circuit (SB) at the junction point between the second diode (D17) and the secondary winding (RK1-C) or, if appropriate, the booster winding (RK1-D) of the control transformer (RK1-A-C).

7. Circuit arrangement according to Claim 6, characterized in that the common reference potential of the signal-shaping circuit (SF) and turn-off circuit (AK) is connected to the junction point between the sensor diode (D5) and the sensor resistor (R11).

8. Circuit arrangement according to Claim 1, characterized in that the signal-shaping circuit (SF) contains a double RC element (R6, C13, R7, C10).

9. Circuit arrangement according to Claim 8, characterized in that an RC low-pass filter (R6, C11) with a downstream peak value rectifier diode (D14) is connected upstream of the double RC element (R6, C13, R7, C10).

10. Circuit arrangement according to Claim 1, characterized in that the trigger generator (TG) contains a resistor (R1), a capacitor (C3) and a diac (DIAC1), the resistor (R1) and the capacitor (C3) being connected in series, and the diac (DIAC1) making contact with the junction point between the capacitor (C3) and resistor (R1).

11. Circuit arrangement according to Claim 1, characterized in that the transistor (T3) of the turn-off circuit (AK) is replaced by a Darlington circuit (T3, T4).

12. Circuit arrangement according to Claim 11, characterized in that the base terminal of the Darlington circuit (T3, T4) is connected to the signal-shaping circuit via the parallel circuit of a zener diode (D19) and a resistor (R8).

13. Circuit arrangement according to Claim 1, characterized in that in the emitter path of the transistor the turn-off circuit (AK) has a further component, by means of which the threshold voltage for turning on the transistor (T3, T4) can be influenced.

14. Circuit arrangement according to Claim 13, characterized in that the component is an ohmic resistor.

15. Circuit arrangement according to Claim 13, characterized in that the component is a two-pole semiconductor element (D15).

## Revendications

1. Circuit pour faire fonctionner une ou plusieurs lampes à halogène (HG) basse tension branchées en parallèle, constitué de
- un circuit redresseur (GR)
- un transformateur (HW) à demi-pont auto-oscillant comportant deux transistors (T1, T2) en pont et couplé en retour de courant par un transformateur (RK1-A-C) de commande, le transformateur (RK1-A-C) de commande étant constitué d'un enroulement (RK1-A) primaire et de deux enroulements (RK1-B, C) secondaires,
- des condensateurs (C6, C7) en pont agencés parallèlement aux transistors (T1, T2) en pont,
- un générateur (TG) de déclenchement, qui déclenche le transformateur (HW) à demi-pont après chaque valeur minimum de la tension de réseau redressée,
- un transformateur (TR1) de puissance, dont l'enroulement primaire est relié d'une part au point de liaison des deux transistors (T1, T2) en pont par l'intermédiaire de l'enroulement primaire (RK1-A) du transformateur (RK1-A-C) de commande et d'autre part au point de liaison des deux condensateurs (C6, C7) en pont, et dont l'enroulement secondaire est relié à ou aux lampe (s) (HG) à halogène,
- un circuit (AK) de déconnexion, qui déconnecte le générateur (TG) de déclenchement en cas de court-circuit ou de surcharge,
- un circuit (SA) capteur, qui, en cas de court-circuit ou de surcharge, produit un signal de capteur qui commande le circuit de déconnexion et un circuit (SF) de formation de signal, qui prépare le signal de capteur pour la commande du circuit (AK) de déconnexion,
caractérisé en ce que
- le circuit (AK) de déconnexion comporte un transistor (T3) en tant qu'élément de commutation et,
- le circuit (SA) de capteur est constitué du montage en série d'une résistance (R11) de capteur et d'une diode (D5) de capteur, qui est branchée en parallèle avec le condensateur (C7) en pont relié au pôle négatif du circuit (GR) redresseur de sorte que, d'une part la résistance (R11) de capteur est reliée à l'anode de la diode (D5) de capteur, et d'autre part, au pôle négatif du circuit (GR) redresseur et produit un premier signal (A) de capteur, dès que le courant de charge dans le circuit secondaire du transformateur (TR1) de puissance dépasse une valeur prédéterminée.

2. Circuit suivant la revendication 1, caractérisé en ce que le circuit comporte en outre un second circuit (SB) capteur, qui produit un second signal (B) de capteur sensiblement correspondant au courant de charge.

3. Circuit suivant la revendication 2, caractérisé en ce que le second circuit (SB) capteur est constitué de l'enroulement (RK1-C) secondaire respectif du transformateur (RK1-A-C) de commande qui est branché avec le transistor (TE) en pont respectif, dont l'émetteur est relié au pôle négatif du circuit (GR) redresseur.

4. Circuit suivant la revendication 3, caractérisé en ce que le circuit (AK) de déconnexion comporte deux diodes (D16, D17) branchées en série en sens opposé, les deux cathodes des diodes (D16, D17) étant reliées l'une avec l'autre et avec le circuit de déconnexion, l'anode de la première diode (D16) étant reliée avec le générateur (TG) de déclenchement et l'anode de la seconde diode (D16) étant reliée avec l'enroulement (RK1-C) secondaire respectif du transformateur (RK1-A-C) de commande qui est branché respectivement avec le transistor (T2) en pont, dont l'émetteur est relié au pôle négatif du circuit (GR) redresseur.

5. Circuit suivant la revendication 4, caractérisé en ce que le second circuit (SB) capteur comporte un enroulement (RK1-D) supplémentaire sur le transformateur (RK1-A-C) de commande, qui est branché entre l'enroulement (RK1-C) secondaire du transformateur de commande et la seconde diode (D17).

6. Circuit suivant l'une des revendications précédentes, caractérisé en ce que le circuit (SF) de formation de signal est relié au circuit (SA) capteur en le point de liaison entre la diode (D5) de capteur et la résistance (R11) de capteur d'une part et au circuit (AK) de déconnexion à la base du transistor (T3) d'autre part et éventuellement au second circuit (SB) capteur au point de liaison entre la seconde diode (D17) et l'enroulement (RK1-C) secondaire ou éventuellement l'enroulement supplémentaire (RK1-D) du transformateur (RK1-A-C) de commande.

7. Circuit suivant la revendication 6, caractérisé en ce que le potentiel de référence commun du circuit (SF) de formation de signal et du circuit de déconnexion (AK) est relié au point de liaison entre la diode (D5) de capteur et la résistance (R11) de capteur.

8. Circuit suivant la revendication 1, caractérisé en ce que circuit (SF) de formation de signal comporte un élément (R6, C13, R7, C10) RC double.

9. Circuit suivant la revendication 8, caractérisé en ce qu'un passe bas (R6, C11) RC comportant une diode (D14) de redressement à valeur de pointe branchée à la suite est branché en amont de l'élément (R6, C13, R7, C10) à RC double.

10. Circuit suivant la revendication 1, caractérisé en ce que le générateur (TG) de déclenchement comporte une résistance (R1), un condensateur (C3) et un Diac (DIAC1), la résistance (R1) et le condensateur (C3) étant branchés en série, et le Diac (DIAC1) étant en contact avec le point de liaison entre le condensateur (C3) et la résistance (R1).

11. Circuit suivant la revendication 1, caractérisé en ce que le transistor (T3) du circuit (AK) de déconnexion est remplacé par un circuit (T3, T4) Darlington.

12. Circuit suivant la revendication 11, caractérisé en ce que la borne de base du circuit (T3, T4) Darlington est reliée au circuit de formation de signal par l'intermédiaire du circuit en parallèle formé d'une diode (D19) Zener et d'une résistance (R8).

13. Circuit suivant la revendication 1, caractérisé en ce que le circuit (AK) de déconnexion comporte dans la branche émetteur du transistor un composant supplémentaire, par lequel la tension de seuil pour la commande du passage du transistor (T3, T4) peut être influencée.

14. Circuit suivant la revendication 13, caractérisé en ce que le constituant est une résistance ohmique.

15. Circuit suivant la revendication 13, caractérisé en ce que le constituant est un élément à semi-conducteur (D15) à deux pôles.
